Europäisches Patentamt

European Patent Office

Office européen des brevets

(19)

(11) Publication number: **0 356 186 A2**

# EUROPEAN PATENT APPLICATION

(12)

(21) Application number: **89308462.4**

(22) Date of filing: **21.08.89**

(51) Int. Cl.5: **H 02 H 9/02**

(30) Priority: **24.08.88 GB 8820078**

(43) Date of publication of application:
**28.02.90 Bulletin 90/09**

(84) Designated Contracting States:
**DE ES FR IT NL SE**

(71) Applicant: **STC PLC**
**10, Maltravers Street**
**London, WC2R 3HA (GB)**

(72) Inventor: **Cannon, George Daniel**
**236, Westdale Lane**
**Gedling Nottingham, NG4 4FU (GB)**

**Langstaff, Anthony James**
**16, Heather Glen**
**Rise Park Romford Essex RM1 4SR (GB)**

(54) **Power control circuit for electronic equipment.**

(57) A power control circuit for electronic equipment including a power MOSFET the source-drain path of which is connected in series with the electronic equipment power supply, means for sensing the load voltage rise in the power supplied to the electronic equipment and feedback means responsive to the sensed voltage rise to control the gate voltage applied to the MOSFET over a predetermined period of time.

*Fig.1*

LOAD CURRENT

EP 0 356 186 A2

**Description**

## POWER CONTROL CIRCUIT FOR ELECTRONIC EQUIPMENT

This invention relates to a power control circuit for electronic equipment which is prone to faults caused by transient current surges.

A space saving construction for communication transmission and other digital equipment is to use a shelf or subrack providing a common backplane into which several functional units can be inserted as plug-in cards. This backplane commonly carries several transmission bus highways and power supplies to the plug-in units. It is an operating requirement that staff shall be able to remove or insert individual plug-in units without causing transmission errors in other units sharing the same shelf.

A primary cause of error is the transient inrush current of many tens of amps as a card is inserted into an operating shelf. This can cause errors in other circuits, firstly by the resultant collapse of the supply voltage rails and secondly because the high current pulse induces a disturbance into working circuit via the power and signal bus lines.

A conventional solution to this problem is to insert a fixed impedance in the plug-in unit power connections. However, resistance introduces significant voltage drop and loss of overall power efficiency. Inductances have to be of unacceptably large proportions not to saturate on the inrush current and introduce disconnection problems. A thermistor is satisfactory in some instances except that the residual hot resistance tends to be high and power is wasted.

According to the present invention there is provided a power control circuit for electronic equipment including a power MOSFET the source-drain path of which is connected in series with the electronic equipment power supply, means for sensing the load voltage rise in the power supplied to the electronic equipment and feedback means responsive to the sensed voltage rise to control the gate voltage applied to the MOSFET over a predetermined period of time.

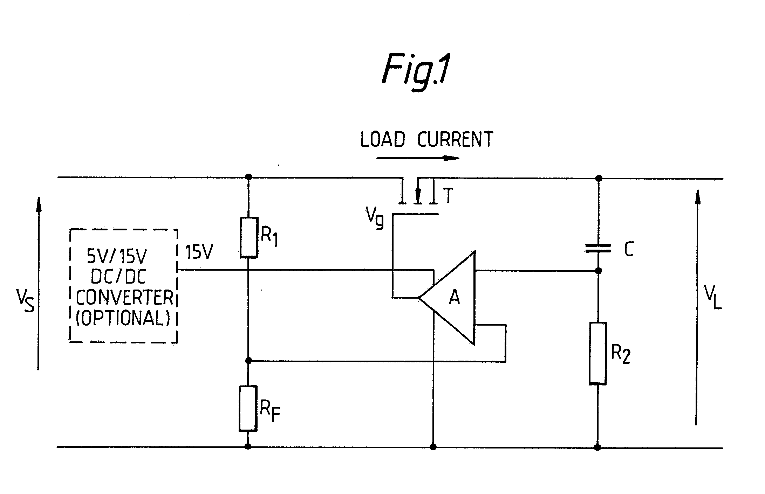

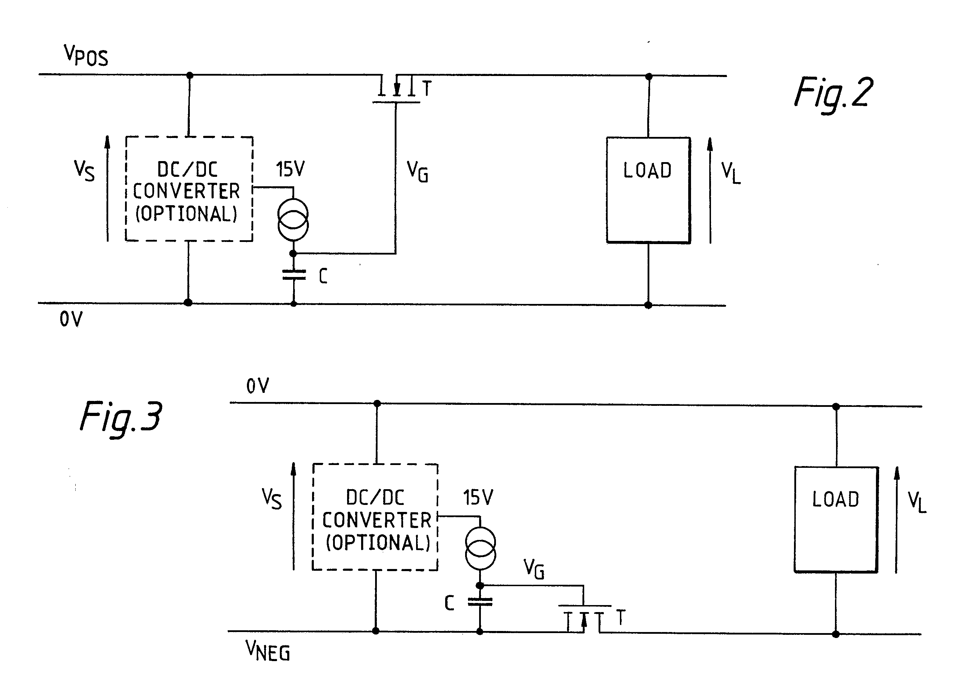

An embodiment of the invention will now be described with reference to the accompanying drawing which is a schematic circuit diagram of a power control circuit.

In the circuit illustrated a power MOSFET T has its source drain path connected in series with one side of the power supply from a power source $V_S$ to a load $V_L$, typically a functional unit on a plug-in card. A capacitor/resistance shunt connection $C/R_2$ is connected across the power supply on the load side of the MOSFET. The voltage developed accross $R_2$ is applied to one input of a differential operational amplifier A. A potential divider $R_1/R_F$ is connected across the power supply on the source side of the MOSFET to provide a reference voltage for the other input of the amplifier The operational amplifier is supplied with an external voltage supply for its output which is connected to the MOSFET gate.

When fully conducting the forward resistance of the MOSFET is typically 30 milli ohms or less and hence the permahently dissipated power loss, with a typical 3 amp load is approximately O.25W.

The impedance of the MOSFET is a function of the gate voltage - minimum impedance being realised at a maximum value of gate potential of about 12 volts. This property is used to control the rate at which the load voltage, and hence inrush current rises. As $V_L$ rises, current flows through the shunt arm C and $R_2$ causing a voltage to be developed across $R_2$. If this is greater than the reference voltage developed across $R_F$, then the operational amplifier reduces the voltage Vg applied to the MOSFET gate. Conversely when the voltage across $R_2$ falls below that across $R_f$, Vg is increased causing $V_L$ to rise.

For higher loads, e.g. in excess of 3 amps, two MOSFETs can be connected in parallel.

By choosing the values of C and $R_2$, $V_L$ is made to rise smoothly from 0 volts to $V_S$ over a period e.g. of approximately 100 milliseconds and inrush current related noise problems are eliminated.

If a 12 volt supply for the operational amplifier is not available this can be generated as a low current source, e.g. by a dc/dc converter.

A convenient implementation, including a 5/15V dc/dc potential converter, has been realised as a thick film hybrid assembly. This item can then be used as a standard part of all plug-in functional cards.

**Claims**

1. A power control circuit for electronic equipment having a power MOSFET the source-drain path of which is connected in series with the electronic equipment power supply, characterised in that the circuit includes means for sensing the load voltage rise in the power supplied to the electronic equipment and feedback means responsive to the sensed voltage rise to control the gate voltage applied to the MOSFET over a predetermined period of time.

2. A power control circuit according to claim 1 characterised in that the means for sensing the load voltage rise comprises a capacitance in series with a resistance connected as a shunt across the power supply on the load side of the MOSFET, the voltage developed across the resistance being a measure of the load voltage.

3. A power control circuit according to claim 2 characterised in that the feedback means comprises a differential operational amplifier one input of which is fed with the voltage developed across the resistance in the shunt connection, the other input to the amplifier being fed with a reference voltage, the output of the amplifier supplying a gate control voltage for the MOSFET.

4. A power control circuit for electronic equipment having a power MOSFET the source-drain path of which is connected in series with the non-zero voltage side of a power supply for the equipment, characterised in that the circuit includes a capacitor connected between the MOSFET gate and the zero voltage side of the power supply, and a constant current circuit connected to the MOSFET gate to effect a controlled changing of the capacitor when the constant current circuit is energised.

5. A power control circuit according to claim 4 characterised in that the constant current circuit is energised from the non-zero voltage side of the power supply.

6. A power control circuit according to claim 4 characterised in that the constant current circuit is energised from a dc/dc converter which is connected across the power supply for the equipment.

EP 0 356 186 A2

## Fig.1

LOAD CURRENT

Fig.2

Fig.3